# EUROPÄISCHE PATENTSCHRIFT

(11) **EP 3 713 786 B1**
(45) Veröffentlichungstag und Bekanntmachung des Hinweises auf die Patenterteilung: **09.08.2023**
(21) Anmeldenummer: 18800846.0
(22) Anmeldetag: 23.10.2018
(51) Int. Cl.: B60K 6/387, B60K 6/442, B60K 6/36

(54) **HYBRID-ANTRIEBSSTRANG MIT ZWEI ELEKTRISCHEN MASCHINEN UND EINER VERBRENNUNGSKRAFTMASCHINE**
HYBRID POWERTRAIN WITH TWO ELECTRIC MACHINES AND AN INTERNAL COMBUSTION ENGINE
CHAÎNE CINÉMATIQUE HYBRIDE AYANT DEUX MACHINES ÉLECTRIQUES ET UN MOTEUR À COMBUSTION INTERNE

(30) Priorität: 23.11.2017 DE 102017127695
(43) Veröffentlichungstag der Anmeldung: 30.09.2020
(60) Teilanmeldung: 20196340.2
(73) Patentinhaber: Schaeffler Technologies AG & Co. KG, 91074 Herzogenaurach (DE)
(72) Erfinder: LEHMANN, Steffen, 76275 Ettlingen (DE); TRINKENSCHUH, Andreas, 77815 Bühl (DE)
(86) Internationale Anmeldenummer: PCT/DE2018/100865
(87) Internationale Veröffentlichungsnummer: WO 2019/101264

(56) Entgegenhaltungen:
- EP-A2- 2 578 428
- WO-A1-2006/034520
- WO-A1-2011/054097
- US-A1- 2003 106 729
- US-A1- 2006 102 409

## Beschreibung

Die Erfindung betrifft einen Antriebsstrang für ein Hybridkraftfahrzeug, mit einer Getriebeeingangswelle, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht, wobei die zweite elektrische Maschine dauerhaft mit der Getriebeeingangswelle drehmomentübertragend verbunden ist und die erste elektrische Maschine und die Verbrennungskraftmaschine koppelbar zur Drehmomentübertragung mit der Getriebeeingangswelle verbindbar sind.

Aus dem Stand der Technik sind bereits Antriebseinrichtungen für Hybridfahrzeuge bekannt. Zum Beispiel offenbart die DE 10 2015 222 691 A1 eine Antriebseinrichtung und ein Verfahren zum Steuern der Antriebseinrichtung eines Hybridfahrzeuges, die eine Verbrennungskraftmaschine, eine erste Elektromaschine, eine zweite Elektromaschine und einen Akkumulator umfasst.

Auch die US 2006/102409 A1 offenbart eine hybride Antriebseinrichtung mit zwei Elektromaschinen und einer Verbrennungskraftmaschine. Die zweite Elektromaschine ist mit einer Getriebeeingangswelle des Antriebsstrangs drehmomentübertragend verbunden, während die erste Elektromaschine über eine Ausgangswelle der Verbrennungskraftmaschine fest mit dieser verbunden ist. Die Verbrennungskraftmaschine und erste Elektromaschine können über eine Kupplung mit der Ausgangswelle der zweiten Elektromaschine koppelbar zur Drehmomentübertragung mit der Getriebeeingangswelle verbunden werden. Das mit der Getriebeeingangswelle verbundene Getriebe dieses Antriebsstrangs weist eine Vielzahl von Kupplungen zur Drehmomentübertragung an eine Getriebeausgangswelle auf.

Auch offenbart die DE 10 2015 222 690 A1 eine Antriebseinrichtung und ein Verfahren zum Steuern der Antriebseinrichtung eines Hybridfahrzeuges, die eine Verbrennungskraftmaschine, eine erste Elektromaschine, eine zweite Elektromaschine und einen Akkumulator umfasst, wobei die Antriebseinrichtung zum Antrieb des Hybridfahrzeuges in den folgenden drei Betriebsmodi betreibbar ist: einem rein elektrischen Betrieb, in dem ein Fahrantriebsdrehmoment mittels der zweiten Elektromaschine bewirkt wird, während die Verbrennungskraftmaschine ausgeschaltet ist; einem seriellen Hybridbetrieb, in dem das Fahrantriebsdrehmoment mittels der zweiten Elektromaschine bewirkt wird und die Verbrennungskraftmaschine die erste Elektromaschine zur Erzeugung von elektrischer Energie antreibt; einem parallelen Hybridbetrieb, in dem ein Fahrantriebsdrehmoment mittels der Verbrennungskraftmaschine bewirkt wird, wobei das Verfahren aufweist: Steuern der Antriebseinrichtung im seriellen Hybridbetrieb derart, dass die Verbrennungskraftmaschine an einem Arbeitspunkt basierend auf einem kombinierten Wirkungsgrad betrieben wird, der von dem Wirkungsgrad der Verbrennungskraftmaschine und von dem Wirkungsgrad der ersten Elektromaschine abhängt.

Unter anderem offenbart auch die DE 10 2015 222 692 A1 eine Antriebseinrichtung und ein Verfahren zum Betreiben der Antriebseinrichtung eines Hybridfahrzeuges zum Antreiben eines Antriebsrads, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst, wobei das Verfahren aufweist: Betreiben der Antriebseinrichtung in einem ersten Betriebsmodus der folgenden drei Betriebsmodi: einem rein elektrischen Betrieb, in dem ein auf das Antriebsrad wirkendes Fahrantriebsdrehmoment mittels der zweiten Elektromaschine bewirkt wird, während die Verbrennungskraftmaschine ausgeschaltet ist; einem seriellen Hybridbetrieb, in dem die Verbrennungskraftmaschine die erste Elektromaschine zur Erzeugung von elektrischer Energie antreibt, welche von der zweiten Elektromaschine verwendet wird, um das Fahrantriebsdrehmoment zu bewirken; einem parallelen Hybridbetrieb, in dem das Fahrantriebsdrehmoment mittels der Verbrennungskraftmaschine bewirkt wird; und zumindest einmal Wechseln von dem ersten Betriebsmodus in einen zweiten Betriebsmodus der drei Betriebsmodi, wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht.

Zusätzlich offenbart die DE 10 2015 222 694 A1 eine Antriebseinrichtung und ein Verfahren zum Betreiben der Antriebseinrichtung eines Hybridfahrzeuges zum Antreiben eines Antriebsrades, wobei die Antriebseinrichtung eine Verbrennungskraftmaschine, eine mit der Verbrennungskraftmaschine gekoppelte erste Elektromaschine, eine mit dem Antriebsrad koppelbare zweite Elektromaschine sowie einen elektrischen Akkumulator umfasst und ferner eine Hauptkupplung und ein Getriebe umfasst, die zwischen der Verbrennungskraftmaschine und dem Antriebsrad angeordnet sind, wobei das Verfahren aufweist: während ein erster Gang des Getriebes eingelegt ist, Betreiben der Verbrennungskraftmaschine bei einer ersten Drehzahl für den ersten Gang in einem parallelen Hybridbetrieb, in dem bei geschlossener Hauptkupplung ein auf das Antriebsrad wirkendes Fahrantriebsdrehmoment mittels der Verbrennungskraftmaschine erzeugt wird; Wechseln in einen seriellen Hybridbetrieb, in dem die Verbrennungskraftmaschine die erste Elektromaschine zur Erzeugung von elektrischer Energie antreibt, welche von der zweiten Elektromaschine verwendet wird, um das Fahrantriebsdrehmoment zu bewirken; Öffnen der Hauptkupplung; Einstellen einer Drehzahl der Verbrennungskraftmaschine bei geöffneter Hauptkupplung auf eine zweite Drehzahl für einen zweiten Gang des Getriebes in dem parallelen Hybridbetrieb; Einlegen des zweiten Ganges des Getriebes; Schließen der Hauptkupplung; und Wechseln in den parallelen Hybridbetrieb, während der zweite Gang eingelegt ist.

Die WO 2006/034520 A1 zeigt einen hybriden Antriebsstrang mit zwei

Elektromaschinen, die in Reihe geschaltet und mittels einer Trennkupplung verbindbar sind. Die US 2003106729 A1 zeigt ebenso einen hybriden Antriebsstrang mit zwei Elektromaschinen , die in Reihe geschaltet und mittels einer Trennkupplung verbindbar sind.

Der Stand der Technik hat jedoch immer den Nachteil, dass ein Antriebsstrang eines Hybridfahrzeugs mit zwei elektrischen Maschinen und einer Verbrennungskraftmaschine sehr bauraumintensiv, insbesondere hinsichtlich der axialen Gesamtlänge, und sehr kostenintensiv durch die große Anzahl an benötigten Bauteilen, wie beispielsweise Zahnrädern, Zahnradpaarungen, Lagern und Wellen, ist.

Es ist also die Aufgabe der Erfindung, die Nachteile aus dem Stand der Technik zu vermeiden oder wenigstens zu verringern. Insbesondere soll ein Antriebsstrang für ein Hybridfahrzeug mit zwei elektrischen Maschinen und einer Verbrennungskraftmaschine entwickelt werden, der sowohl bauraumsparend als auch kostengünstig umgesetzt werden kann.

Die Aufgabe der Erfindung wird bei einer gattungsgemäßen Vorrichtung erfindungsgemäß den Merkmalen des Anspruchs 1 gelöst.

Die zweite elektrische Maschine ist dauerhaft, d.h. permanent/fest/nicht koppelbar, mit der Getriebeeingangswelle drehmomentübertragend verbunden und die erste elektrische Maschine und die Verbrennungskraftmaschine sind koppelbar, d.h. selektiv schaltbar, zur Drehmomentübertragung mit der Getriebeeingangswelle verbindbar. Das heißt also, dass die im Stand der Technik beschriebenen Kupplungen K1 und K2, die die Verbrennungskraftmaschine mit der ersten elektrischen Maschine bzw. die zweite elektrische Maschine mit der Getriebeeingangswelle koppelbar verbinden, entfallen. Dies hat den Vorteil, dass dadurch die Anzahl an benötigten Bauteilen erheblich reduziert werden kann, was sich günstig auf die Gesamtkosten auswirkt.

Vorteilhafte Ausführungsformen sind in den Unteransprüchen beansprucht und werden nachfolgend näher erläutert.

Zudem ist es zweckmäßig, wenn die erste elektrische Maschine und die zweite elektrische Maschine koaxial zueinander angeordnet sind. Dadurch kann eine Übersetzungsstufe zur Übertragung des Drehmoments der ersten elektrischen Maschine an eine Abtriebswelle der zweiten elektrischen Maschine (und von dort aus an die Getriebeeingangswelle) entfallen, was sich günstig auf die Anzahl an Bauteilen und damit günstig auf die Kosten auswirkt.

Erfindungsgemäß ist vorgesehen, dass eine schaltbare Kupplung zwischen dem zweiten Teilantriebsstrang mit der zweiten elektrischen Maschine und dem ersten Teilantriebsstrang mit der ersten elektrischen Maschine und der Verbrennungskraftmaschine angeordnet ist. Mit anderen Worten wird also die Trennkupplung (K0) erfindungsgemäß zwischen den beiden elektrischen Maschinen angeordnet, was vorteilhafterweise eine kompakte Ausgestaltung des Antriebsstrangs und damit eine Reduzierung der Gesamtaxiallänge ermöglicht. Außerdem reduziert sich dadurch das zu übertragende Drehmoment an der Trennkupplung, was in vorteilhafter Weise eine kompaktere Auslegung der Trennkupplung mit einem niedrigeren Bauraumbedarf ermöglicht. Erfindungsgemäß ist es vorgesehen, dass die erste elektrische und die zweite elektrische Maschine so angeordnet und ausgelegt sind, dass sie bei geschlossener Trennkupplung mit derselben Drehzahl drehen. Erfindungsgemäß ist vorgesehen, dass nur eine Kupplung in dem Antriebsstrang angeordnet ist. Das heißt also, dass die Kupplungen zwischen der Verbrennungskraftmaschine und der ersten elektrischen Maschine und zwischen der zweiten elektrischen Maschine und der Getriebeeingangswelle ersatzlos wegfallen. Dadurch wird vorteilhafterweise eine Reduzierung an benötigten Bauteilen erreicht. Zudem ist es von erfindungsgemäß vorgesehen, dass die erste elektrische Maschine dauerhaft, d.h. permanent, mit der Verbrennungskraftmaschine drehmomentübertragend verbunden ist. So kann die Kupplung zwischen der Verbrennungskraftmaschine und der ersten elektrischen Maschine entfallen. Dies ist nur dann bevorzugt, wenn das Hybridfahrzeug in keinem Betriebszustand allein durch die erste elektrische Maschine zum elektrischen Fahren angetrieben wird.

Auch zeichnet sich ein günstiges Ausführungsbeispiel dadurch aus, dass nur eine (erste) Übersetzungsstufe zwischen der Verbrennungskraftmaschine und der ersten elektrischen Maschine sowie der zweiten elektrischen Maschine ausgebildet ist. Durch die koaxiale Anordnung der beiden elektrischen Maschinen zueinander und die achsparallele Anordnung der Verbrennungskraftmaschine zu den beiden elektrischen Maschinen ist also nur eine Übersetzungsstufe notwendig. Dadurch werden vorteilhafterweise zusätzlich Bauteile für eine weitere Übersetzungsstufe eingespart.

Insbesondere ist es also von Vorteil, wenn die Verbrennungskraftmaschine achsparallel zu der ersten elektrischen Maschine und/oder der zweiten elektrischen Maschine angeordnet ist. So ist zum einen nur eine gemeinsame Übersetzungsstufe notwendig und zum anderen eine Drehmomentübersetzung eines Antriebsflanschs der Verbrennungskraftmaschine auf die Abtriebswelle der ersten elektrischen Maschine und/oder der zweiten elektrischen Maschine möglich.

Besonders bevorzugt ist es dabei, wenn die Übersetzungsstufe zwischen der Verbrennungskraftmaschine und der ersten elektrischen Maschine und/oder der zweiten elektrischen Maschine ausgehend von der Verbrennungskraftmaschine als ein treibendes Element und die beiden elektrischen Maschine als ein getriebenes Element als eine Übersetzung ins Schnelle (i < 1) ausgebildet ist. Eine Übersetzung ins Langsame ist in einer alternativen Ausführungsform auch möglich.

Zudem ist es vorteilhaft, wenn eine weitere (zweite) Übersetzungsstufe zwischen der Abtriebswelle der zweiten elektrischen Maschine und der Getriebeeingangswelle bzw. einer Vorgelegewelle vorhanden ist. So kann das Drehmoment des ersten Teilantriebsstrangs und/oder des zweiten Teilantriebsstrangs übersetzt an ein Getriebe weitergegeben werden.

Insbesondere ist es bevorzugt, wenn die zweite Übersetzungsstufe ausgehend von der Abtriebswelle der zweiten elektrischen Maschine als ein treibendes Element und der Vorgelegewelle als ein getriebenes Element als eine Übersetzung ins Langsame (i > 1) ausgebildet ist. Eine Übersetzung ins Schnelle ist in einer alternativen Ausführungsform auch möglich.

Außerdem ist es zweckmäßig, wenn eine weitere (dritte) Übersetzungsstufe zwischen der Vorgelegewelle und einem Differential vorhanden ist. So kann das Drehmoment der Vorgelegewelle übersetzt an das Differential weitergegeben werden.

Insbesondere ist es bevorzugt, wenn die dritte Übersetzungsstufe ausgehend von der Vorgelegewelle als ein treibendes Element und dem Differential als ein getriebenes Element als eine Übersetzung ins Langsame (i > 1) ausgebildet ist. Eine Übersetzung ins Schnelle ist in einer alternativen Ausführungsform auch möglich.

Weiterhin zeichnet sich die Erfindung dadurch aus, dass eine Abtriebswelle der ersten elektrischen Maschine radial innerhalb einer Abtriebswelle der zweiten elektrischen Maschine angeordnet ist. Dadurch können die beiden elektrischen Maschinen vorteilhafterweise sehr bauraumsparend angeordnet werden, während die Funktionsfähigkeit der beiden elektrischen Maschinen nicht beeinträchtigt wird.

Ferner ist es vorteilhaft, wenn die erste elektrische Maschine und die zweite elektrische Maschine in Axialrichtung auf der einen Seite der (ersten) Übersetzungsstufe bzw. der (zweiten) Übersetzungsstufe und die Verbrennungskraftmaschine in Axialrichtung auf der anderen Seite der (ersten) Übersetzungsstufe bzw. der (zweiten) Übersetzungsstufe angeordnet sind.

Zusätzlich ist es von Vorteil, wenn die erste elektrische Maschine auf einer Seite der ersten elektrischen Maschine in einem Getriebegehäuse und auf einer anderen Seite der ersten elektrischen Maschine auf der Abtriebswelle der zweiten elektrischen Maschine gelagert ist, oder dass die zweite elektrische Maschine auf einer Seite der zweiten elektrischen Maschine in einem Getriebegehäuse und auf einer anderen Seite der zweiten elektrischen Maschine auf der Abtriebswelle der ersten elektrischen Maschine gelagert ist.

Außerdem ist es zweckmäßig, wenn die erste elektrische Maschine mit zwei Lagern direkt im Getriebegehäuse und die zweite elektrische Maschine mit einem Lager indirekt über die Abtriebswelle der ersten elektrischen Maschine und mit einem Lager direkt im Getriebegehäuse gelagert ist, oder wenn die zweite elektrische Maschine mit zwei Lagern direkt im Getriebegehäuse gelagert und die erste elektrische Maschine mit einem Lager direkt im Getriebegehäuse und mit einem Lager indirekt über die Abtriebswelle der zweiten elektrischen Maschine im Getriebegehäuse gelagert ist.

Auch ist es bevorzugt, wenn die erste elektrische Maschine und/oder die zweite elektrische Maschine gekühlt sind. Besonders ist es bevorzugt, wenn die Kühlung mittels einer Wasserkühlung aus einem Fahrzeug-Kühlkreis oder mittels einer Ölkühlung mit Getriebeöl aus dem Getriebe heraus ausgebildet ist.

Ferner ist es zweckmäßig, wenn die erste elektrische Maschine und/oder die zweite elektrische Maschine sowohl als eine Traktionsmaschine im motorischen Betrieb als auch als ein Generator im generatorischen Betrieb einsetzbar sind/ist. Dadurch ist es möglich, den Antriebsstrang in verschiedenen Betriebsmodi zu verwenden.

Auch ist es zweckmäßig, wenn ein Dämpfer zwischen der Verbrennungskraftmaschine und der ersten und/oder der zweiten elektrischen Maschine angeordnet ist. So können vorteilhafterweise Schwingungen ausgeglichen und Resonanzen beeinflusst werden.

Zudem ist es von Vorteil, wenn eine Rutschkupplung zwischen der Verbrennungskraftmaschine und der ersten und/oder der zweiten elektrischen Maschine angeordnet ist. So kann der Antriebsstrang vor einer Überlast geschützt werden.

Außerdem ist es vorteilhaft, wenn eine Parksperre zum Feststellen der Getriebeeingangswelle in einem geparkten Zustand des Kraftfahrzeugs, vorzugsweise mittels einer formschlüssigen Verbindung mit der Vorgelegewelle, vorhanden ist. Bevorzugt ist es auch, wenn die Parksperre elektromechanisch oder mechanisch betätigt wird.

Weiterhin zeichnet sich ein günstiges Ausführungsbeispiel dadurch aus, dass die Trennkupplung als eine vorzugsweise ölgekühlte Lamellenkupplung ausgebildet ist. Auch ist es vorteilhaft, wenn die Trennkupplung als eine Klauenkupplung ausgebildet ist. Es ist auch möglich, die Trennkupplung als eine elektromagnetische Kupplung auszubilden.

Ferner ist es von Vorteil, wenn die Trennkupplung durch ein Zentralausrücksystem betätigbar ist. Dabei kann das Zentralausrücksystem hydraulisch, mechanisch oder elektromechanisch aktuiert werden. Zusätzlich ist es zweckmäßig, wenn die Trennkupplung durch eine hydraulische Drehdurchführung betätigbar ist.

Außerdem ist es vorteilhaft, wenn die Trennkupplung als normally-closed, normallyopen oder normally-stay Kupplung ausgeführt ist. In der erfindungsgemäßen Ausführungsform ist ein Teil der Trennkupplung, beispielsweise ein Innenlamellenträger, mit der Abtriebswelle der ersten elektrischen Maschine verbunden, und ein anderer Teil der Trennkupplung, beispielsweise ein Außenlamellenträger, mit der Abtriebswelle der zweiten elektrischen Maschine verbunden.

Auch ist es von Vorteil, wenn der Antriebsstrang den Betrieb in einem ersten Betriebsmodus ermöglicht, in dem die Getriebeeingangswelle rein elektrisch angetrieben wird und eine Rekuperation ermöglicht ist. In dem erstem Betriebsmodus ist die Trennkupplung geöffnet und die erste elektrische Maschine und die Verbrennungskraftmaschine, also der erste Teilantriebsstrang, von der Getriebeeingangswelle abgekoppelt. So wird als nur die zweite elektrische Maschine als Antriebsmaschine eingesetzt. Die zweite elektrische Maschine wird also als Traktionsmaschine (beim elektrischen Fahren/Antreiben) und als Generator (bei der Rekuperation beim Bremsen) eingesetzt.

Auch ist es vorteilhaft, wenn der Antriebsstrang den Betrieb in einem zweiten Betriebsmodus ermöglicht, in dem ein serieller Hybridbetrieb ausgeführt wird. Das heißt, dass die zweite elektrische Maschine als Traktionsmaschine für die Getriebeeingangswelle wirkt und die Verbrennungskraftmaschine die erste elektrische Maschine zur Erzeugung elektrischer Energie antreibt. In dem zweiten Betriebsmodus ist die Trennkupplung geöffnet.

Ferner ist es zweckmäßig, wenn der Antriebsstrang den Betrieb in einem dritten Betriebsmodus ermöglicht, in dem ein paralleler Hybridbetrieb ausgeführt wird. Das heißt, dass die Verbrennungskraftmaschine und zusätzlich die erste und/oder die zweite elektrische Maschine ein Drehmoment auf die Getriebeeingangswelle aufbringt. Die Trennkupplung ist also geschlossen.

Es ist also von Vorteil, wenn der Antriebsstrang so ausgebildet, dass ein Betrieb in einem ersten Betriebsmodus zum rein elektrischen Antreiben, in dem die Kupplung geöffnet ist und nur die zweite elektrische Maschine als Antriebsmaschine für die Getriebeeingangswelle wirkt, und/oder in einem zweiten Betriebsmodus zum seriellen Hybridantrieb, in dem die Kupplung geöffnet ist, die zweite elektrische Maschine als Antriebsmaschine für die Getriebeeingangswelle wirkt und die Verbrennungskraftmaschine als Antriebsmaschine für die erste elektrische Maschine zum Erzeugen elektrischer Energie wirkt, und/oder in einem dritten Betriebsmodus zum parallelen Hybridantrieb, in dem die Verbrennungskraftmaschine und zusätzlich die erste elektrische Maschine und/oder die zweite elektrische Maschine als Antriebsmaschine für die Getriebeeingangswelle wirkt, ermöglicht ist.

Die Erfindung wird nachfolgend mit Hilfe von Zeichnungen erläutert. Es zeigen:
- Fig. 1: zeigt eine Prinzipdarstellung eines nicht erfindungsgemäßen Antriebsstrangs für ein Hybridkraftfahrzeug,
- Fig. 2: zeigt eine schematische Darstellung des erfindungsgemäßen Antriebsstrangs mit einer ersten Lagerausführung,
- Fig. 3: zeigt eine schematische Darstellung des Antriebsstrangs mit einer zweiten Lagerausführung,
- Fig. 4: zeigt eine Längsschnittdarstellung des Antriebsstrangs aus Fig. 3, und
- Fig. 5: zeigt eine zur Fig. 4 vergrößerte Längsschnittdarstellung eines Teils des Antriebsstrangs.

Die Zeichnungen sind lediglich schematischer Natur und dienen ausschließlich dem Verständnis der Erfindung. Die gleichen Elemente sind mit denselben Bezugszeichen gekennzeichnet.

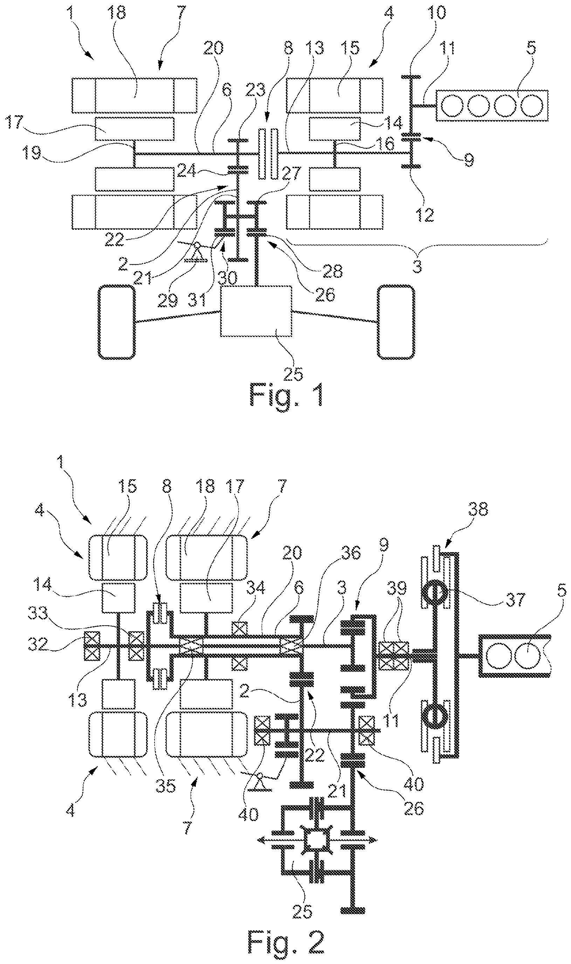

Fig. 1 zeigt eine Prinzipdarstellung eines Antriebsstrangs 1 für ein Hybridkraftfahrzeug. In dem Antriebsstrang 1 steht eine Getriebeeingangswelle 2 über einen ersten Teilantriebsstrang 3 mit einer ersten elektrischen Maschine (E-Maschine) 4 und einer Verbrennungskraftmaschine (VKM) 5 zur Drehmomentübertragung koppelbar in Wirkbeziehung. Die Getriebeeingangswelle 2 steht über einen zweiten Teilantriebsstrang 6 mit einer zweiten elektrischen Maschine (E-Maschine) 7 dauerhaft in Wirkbeziehung. Die zweite elektrische Maschine 7 ist in jedem Betriebszustand mit der Getriebeeingangswelle 2 verbunden, während die erste elektrische Maschine 4 und die Verbrennungskraftmaschine 5 über eine Kupplung/Trennkupplung 8 von der Getriebeeingangswelle 2 abgekoppelt werden können.

Der erste Teilantriebsstrang 3 ist also über die Trennkupplung 8 mit dem zweiten Teilantriebsstrang 6 und damit mit der Getriebeeingangswelle 2 zur Drehmomentübertragung verbindbar. Die erste elektrische Maschine 4 ist koaxial zu der zweiten elektrischen Maschine 7 angeordnet. Die Verbrennungskraftmaschine 5 ist achsparallel zu der ersten elektrischen Maschine 4 und der zweiten elektrischen Maschine 7 angeordnet. Die Verbrennungskraftmaschine 5 ist dauerhaft, d.h. nicht abkoppelbar, mit der ersten elektrischen Maschine 4 über eine erste Übersetzungsstufe (i₁) 9 drehmomentübertragend verbunden. Die erste Übersetzungsstufe 9 wird durch eine Verzahnung 10 an einem Antriebsflansch 11 der Verbrennungskraftmaschine 5 und einer Verzahnung 12 an einer Abtriebswelle 13 der ersten elektrischen Maschine 4 ausgebildet. Die erste Übersetzungsstufe 9 ist ausgehend von der Verbrennungskraftmaschine 5 eine Übersetzung ins Schnelle, d.h. i₁ < 1. Die Abtriebswelle 13 kann auch als Antriebswelle fungieren, wenn die erste elektrische Maschine 4 in einem generatorischen Betrieb eingesetzt wird. Jedoch wird die Ab-/Antriebswelle 13 der ersten elektrischen Maschine 4 der Einfachheit halber im Folgenden als Abtriebswelle 13 bezeichnet.

Die erste elektrische Maschine 4 weist einen Rotor 14 und einen konzentrisch und radial außerhalb dazu angeordneten Stator 15 auf. Der Rotor 14 ist über einen Rotorträger 16 mit der Abtriebswelle 13 der ersten elektrischen Maschine 4 fest verbunden. Die Abtriebswelle 13 ist drehfest mit einem Teil der Trennkupplung 8 verbunden.

Die zweite elektrische Maschine 7 weist einen Rotor 17 und einen konzentrisch und radial außerhalb dazu angeordneten Stator 18 auf. Der Rotor 17 ist über einen Rotorträger 19 mit einer Abtriebswelle 20 der zweiten elektrischen Maschine 7 fest verbunden. Die Abtriebswelle 20 kann auch als Antriebswelle fungieren, wenn die zweite elektrische Maschine 7 in einem generatorischen Betrieb eingesetzt wird. Jedoch wird die Ab-/Antriebswelle 20 der zweiten elektrischen Maschine 7 der Einfachheit halber im Folgenden als Abtriebswelle 20 bezeichnet. Die Abtriebswelle 20 der zweiten elektrischen Maschine 7 ist drehfest mit einem anderen Teil der Trennkupplung 8 verbunden, so dass die Abtriebswelle 20 der zweiten elektrischen Maschine 7 bei geschlossener Trennkupplung 8 drehfest mit der Abtriebswelle 13 der ersten elektrischen Maschine 4 gekoppelt ist.

Die Abtriebswelle 20 der zweiten elektrischen Maschine 7 ist dauerhaft, d.h. nicht abkoppelbar, mit der Getriebeeingangswelle 2 bzw. mit einer Vorgelegewelle 21 über eine zweite Übersetzungsstufe (i₂) 22 drehmomentübertragend verbunden. Die zweite Übersetzungsstufe 22 wird durch eine Verzahnung 23 an der Abtriebswelle 20 der zweiten elektrischen Maschine 7 und eine Verzahnung 24 an der Vorgelegewelle 21 ausgebildet. Die zweite Übersetzungsstufe 22 ist ausgehend von der Abtriebswelle 20 der zweiten elektrischen Maschine 7 eine Übersetzung ins Langsame, d.h. i₂ > 1.

Die Vorgelegewelle 21 ist mit einem Differential 25 über eine dritte Übersetzungsstufe (i₃) 26 drehmomentübertragend verbunden. Die dritte Übersetzungsstufe 26 wird durch eine Verzahnung 27 an der Vorgelegewelle 21 und eine Verzahnung 28 an dem Differential 25 ausgebildet. Die dritte Übersetzungsstufe 26 ist ausgehend von der Vorgelegewelle 21 eine Übersetzung ins Langsame, d.h. is > 1. Eine Parksperre 29 ist über eine formschlüssige Verbindung 30 mit der Vorgelegewelle 21 bzw. mit einer integrierten Verzahnung 31 an der Vorgelegewelle 21 ausgebildet.

Fig. 2 zeigt eine schematische Darstellung des erfindungsgemäßen Antriebsstrangs 1. Der Rotor 14 der ersten elektrischen Maschine 4 ist über ein ersten Lager 32 und ein zweites Lager 33 in einem nicht dargestellten Getriebegehäuse gelagert. Der Rotor 17 der zweiten elektrischen Maschine 4 ist über ein erstes Lager 34 in dem Getriebegehäuse und über ein zweites Lager 35 auf der Abtriebswelle 13 der ersten elektrischen Maschine 4 gelagert. Die Abtriebswelle 20 ist über ein weiteres Lager 36 auf der Abtriebswelle 13 gelagert. Die Abtriebswelle 20 der zweiten elektrischen Maschine 7 ist als eine Hohlwelle ausgebildet, in der die Abtriebswelle 13 der ersten elektrischen Maschine 4 radial innerhalb angeordnet ist. Die erste elektrische Maschine 4 ist in Axialrichtung auf einer verbrennungsmaschinen-abgewandten Seite der zweiten elektrischen Maschine 7 angeordnet. Die Trennkupplung 8 ist in Axialrichtung zwischen der ersten elektrischen Maschine 4 und der zweiten elektrischen Maschine 7 angeordnet. Die Trennkupplung 8 ist in Axialrichtung auf der verbrennungsmaschinen-abgewandten Seite der zweiten elektrischen Maschine 7 angeordnet.

Die erste Übersetzungsstufe 9 ist in Axialrichtung zwischen der Verbrennungskraftmaschine 5 und der zweiten elektrischen Maschine 7 und damit auch zwischen der Verbrennungskraftmaschine 5 und der ersten elektrischen Maschine 4 angeordnet. Die zweite Übersetzungsstufe 22 ist in Axialrichtung zwischen der ersten Übersetzungsstufe 9 und der zweiten elektrischen Maschine 7 angeordnet. Das Lager 36 in Axialrichtung auf Höhe der zweiten Übersetzungsstufe 22 angeordnet.

Die Verbrennungskraftmaschine 5 ist über einen Dämpfer 37 und eine Rutschkupplung 38 an der Abtriebswelle 13 der ersten elektrischen Maschine 4 angebunden. Der Antriebsflansch 11 der Verbrennungskraftmaschine 5 ist über zwei Lager 39 im Getriebegehäuse gelagert. Die Verzahnung 10 des Antriebsflanschs 11 ist alles innerverzahntes Hohlrad ausgebildet. Die Verzahnung 12 der Abtriebswelle 13 sowie die Verzahnung 23 der Abtriebswelle 20 sind jeweils als ein außenverzahntes Stirnrad ausgebildet. Die Vorgelegewelle 21 ist über zwei Lager 40 in dem Getriebegehäuse gelagert. Die Verzahnungen 24, 27 der Vorgelegewelle 21 sind jeweils als ein außenverzahntes Stirnrad ausgebildet. Die Verzahnung 28 des Differentials 25 ist als ein außenverzahntes Stirnrad ausgebildet.

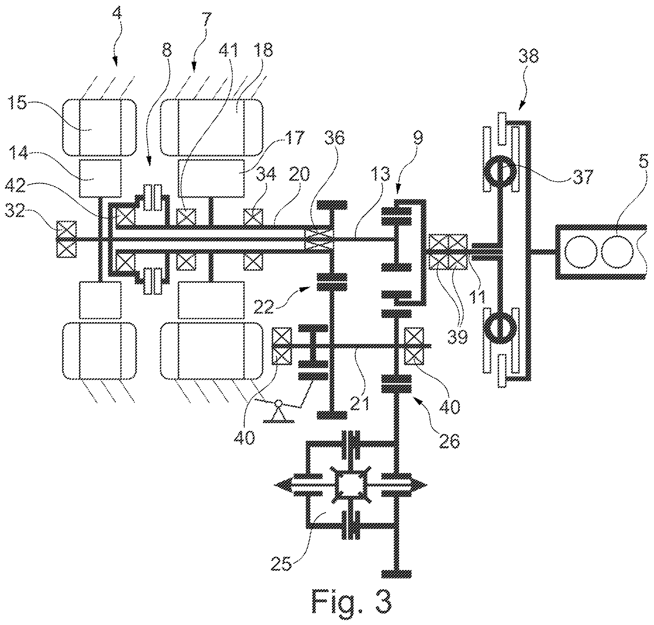

Fig. 3 zeigt eine alternative Lagerung der Abtriebswelle 13 und der Abtriebswelle 20. Die übrigen Merkmale entsprechen denen aus Fig. 2 und werden einfachheitshalber nicht erneut beschrieben. Der Rotor 17 der zweiten elektrischen Maschine 7 ist über das erste Lager 34 und ein zweites Lager 41 in dem Getriebegehäuse gelagert. Der Rotor 14 der ersten elektrischen Maschine 4 ist über das erste Lager 32 in dem Getriebegehäuse und über ein zweites Lager 42 auf der Abtriebswelle 20 der zweiten elektrischen Maschine 7 gelagert. Die Abtriebswelle 13 ist über das weitere Lager 36 auf der Abtriebswelle 20 gelagert.

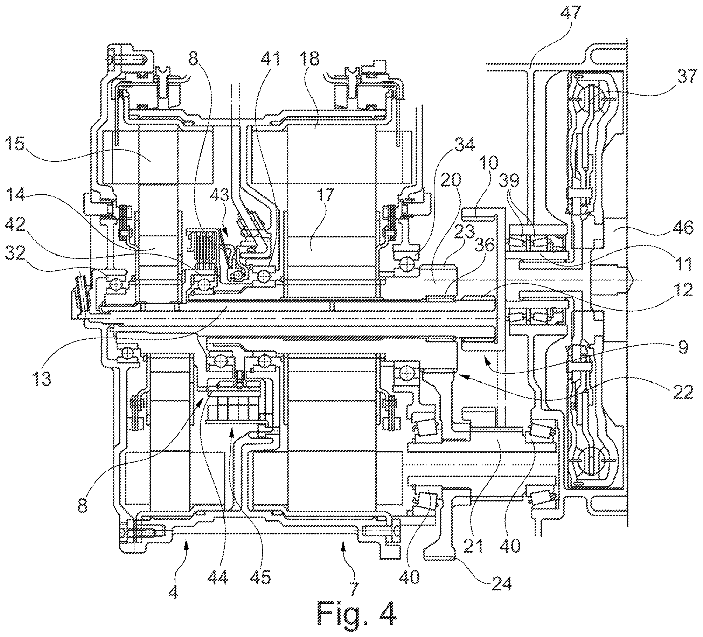

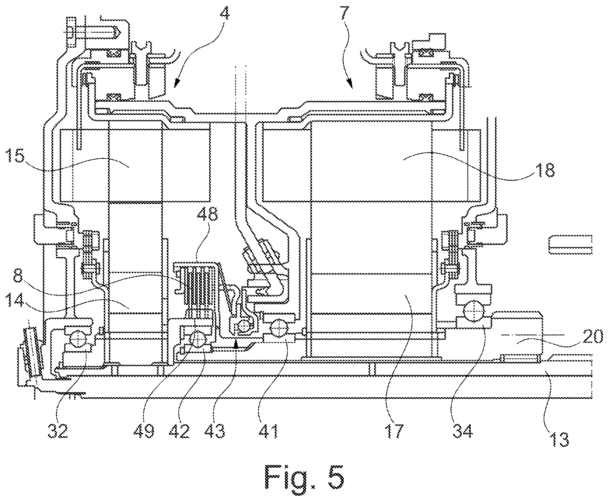

Fign. 4 und 5 zeigen eine Längsschnittdarstellung des Antriebsstrangs 1. Die Trennkupplung 8 ist dabei in einer Ausführungsform als eine Lamellenkupplung ausgebildet, die über einen hydraulischen Zentralausrücker 43 betätigt wird. In einer anderen Ausführungsform ist die Trennkupplung 8 als eine Klauenkupplung ausgebildet, bei der eine Schiebemuffe 44 durch einen Elektromotor 45 elektromotorisch verfahren werden kann, um die Trennkupplung 8 zu öffnen oder zu schließen.

Die Verbrennungskraftmaschine 5 ist über einen Kurbelwellenflansch 46 und über den Dämpfer 37, der als ein Torsionsschwingungsdämpfer ausgebildet ist, mit dem Antriebsflansch 11 verbunden. In den Fign. 4 und 5 ist auch ein Getriebegehäuse 47 dargestellt, in dem die Abtriebswelle 13 über die Lager 32, 42, die Abtriebswelle 20 über die Lager 34, 41, der Antriebsflansch 11 über die Lager 39 und die Vorgelegewelle 21 über die Lager 40 gelagert sind. Die Lager 32, 34, 41, 42 sind als Kugelrollenlager ausgebildet, während die Lager 39 als Kegelrollenlager in einer O-Anordnung und die Lager 40 als Kegelrollenlager in einer X-Anordnung ausgebildet sind.

Die als Lamellenkupplung ausgeführte Trennkupplung 8 in Fig. 5 weist einen Außenlamellenträger 48, der über eine Welle-Nabe-Verbindung drehfest mit der Abtriebswelle 20 verbunden ist, und einen Innenlamellenträger 49 auf, der integral mit dem Rotorträger 16 der ersten elektrischen Maschine 4 ausgebildet ist.

### Bezugszeichenliste

- 1: Antriebsstrang
- 2: Getriebeeingangswelle
- 3: erster Teilantriebsstrang
- 4: erste elektrische Maschine
- 5: Verbrennungskraftmaschine
- 6: zweiter Teilantriebsstrang
- 7: zweite elektrische Maschine
- 8: Trennkupplung
- 9: erste Übersetzungsstufe
- 10: Verzahnung
- 11: Antriebsflansch
- 12: Verzahnung
- 13: An-/Abtriebswelle
- 14: Rotor
- 15: Stator
- 16: Rotorträger
- 17: Rotor
- 18: Stator
- 19: Rotorträger
- 20: An-/Abtriebswelle
- 21: Vorgelegewelle
- 22: zweite Übersetzungsstufe
- 23: Verzahnung
- 24: Verzahnung
- 25: Differential
- 26: dritte Übersetzungsstufe
- 27: Verzahnung
- 28: Verzahnung
- 29: Parksperre
- 30: formschlüssige Verbindung
- 31: integrierte Verzahnung
- 32: erstes Lager
- 33: zweites Lager
- 34: erstes Lager
- 35: zweites Lager
- 36: Lager
- 37: Dämpfer
- 38: Rutschkupplung
- 39: Lager
- 40: Lager
- 41: zweites Lager
- 42: zweites Lager
- 43: Zentralausrücker
- 44: Schiebemuffe
- 45: Elektromotor
- 46: Kurbelwellenflansch
- 47: Getriebegehäuse
- 48: Außenlamellenträger
- 49: Innenlamellenträger

## Patentansprüche

1. Antriebsstrang (1) für ein Hybridkraftfahrzeug, mit einer Getriebeeingangswelle (2), die über einen ersten Teilantriebsstrang (3) mit einer ersten elektrischen Maschine (4) und einer Verbrennungskraftmaschine (5) zur Drehmomentübertragung in Wirkbeziehung steht und die über einen zweiten Teilantriebsstrang (6) mit einer zweiten elektrischen Maschine (7) zur Drehmomentübertragung in Wirkbeziehung steht, wobei die zweite elektrische Maschine (7) dauerhaft mit der Getriebeeingangswelle (2) drehmomentübertragend verbunden ist und die erste elektrische Maschine (4) und die Verbrennungskraftmaschine (5) koppelbar zur Drehmomentübertragung mit der Getriebeeingangswelle (2) verbindbar sind, wobei eine schaltbare Kupplung (8) zwischen dem zweiten Teilantriebsstrang (6) mit der zweiten elektrischen Maschine (7) und dem ersten Teilantriebsstrang (3) mit der ersten elektrischen Maschine (4) und der Verbrennungskraftmaschine (5) angeordnet ist, wobei die erste elektrische Maschine (4) und die zweite elektrische Maschine (7) bei geschlossener Kupplung (8) mit derselben Drehzahl drehen wobei nur eine Kupplung (8) in dem Antriebsstrang (1) angeordnet ist,
die Kupplung (8) zwischen den beiden elektrischen Maschinen (4, 7) angeordnet ist,
die erste elektrische Maschine (4) dauerhaft mit der Verbrennungskraftmaschine (5) drehmomentübertragend verbunden ist, **dadurch gekennzeichnet, dass**
eine Abtriebswelle (13) der ersten elektrischen Maschine (4) radial innerhalb einer Abtriebswelle (20) der zweiten elektrischen Maschine (7) angeordnet ist, und ein Teil der Kupplung (8) mit der Abtriebswelle (13) der ersten elektrischen Maschine (4) verbunden ist, und ein anderer Teil der Kupplung (8) mit der Abtriebswelle (20) der zweiten elektrischen Maschine (7) verbunden ist.

2. Antriebsstrang (1) nach Anspruch 1, **dadurch gekennzeichnet, dass** die erste elektrische Maschine (4) und die zweite elektrische Maschine (7) koaxial zueinander angeordnet sind.

3. Antriebsstrang (1) nach einem der Ansprüche 1 oder 2, **dadurch gekennzeichnet, dass** nur eine Übersetzungsstufe (9) zwischen der Verbrennungskraftmaschine (5) und der ersten elektrischen Maschine (4) sowie der zweiten elektrischen Maschine (7) ausgebildet ist.

4. Antriebsstrang (1) nach einem Anspruch 3, **dadurch gekennzeichnet, dass** die erste elektrische Maschine (4) und die zweite elektrische Maschine (7) in Axialrichtung auf der einen Seite der Übersetzungsstufe (9) und die Verbrennungskraftmaschine (5) in Axialrichtung auf der anderen Seite der Übersetzungsstufe (9) angeordnet sind.

5. Antriebsstrang (1) nach einem der Ansprüche 1 bis 4, **dadurch gekennzeichnet, dass** die erste elektrische Maschine (4) auf einer Seite in einem Getriebegehäuse (47) und auf einer anderen Seite auf der Abtriebswelle (20) der zweiten elektrischen Maschine (7) gelagert ist, oder dass die zweite elektrische Maschine (7) auf einer Seite in einem Getriebegehäuse (47) und auf einer anderen Seite auf der Abtriebswelle (13) der ersten elektrischen Maschine (4) gelagert ist.

6. Antriebsstrang (1) nach einem der Ansprüche 1 bis 5, **dadurch gekennzeichnet, dass** der Antriebsstrang (1) so ausgebildet, dass ein Betrieb in einem ersten Betriebsmodus zum rein elektrischen Antreiben, in dem die Kupplung (8) geöffnet ist und nur die zweite elektrische Maschine (7) als Antriebsmaschine für die Getriebeeingangswelle (2) wirkt, und/oder in einem zweiten Betriebsmodus zum seriellen Hybridantrieb, in dem die Kupplung (8) geöffnet ist, die zweite elektrische Maschine (7) als Antriebsmaschine für die Getriebeeingangswelle (2) wirkt und die Verbrennungskraftmaschine (5) als Antriebsmaschine für die erste elektrische Maschine (4) zum Erzeugen elektrischer Energie wirkt, und/oder in einem dritten Betriebsmodus zum parallelen Hybridantrieb, in dem die Verbrennungskraftmaschine und zusätzlich die erste elektrische Maschine (4) und/oder die zweite elektrische Maschine (7) als Antriebsmaschine für die Getriebeeingangswelle (2) wirkt, ermöglicht ist.

## Claims

1. A powertrain (1) for a hybrid motor vehicle, having a transmission input shaft (2) that is operatively connected to a first electric machine (4) and an internal combustion engine (5) via a first sub-powertrain (3) so as to transmit a torque and which is operatively connected to a second electric machine (7) via a second sub-powertrain (6) so as to transmit a torque, wherein the second electric machine (7) is permanently connected to the transmission input shaft (2) in a torque-transmitting manner, and the first electric machine (4) and the internal combustion engine (5) can be connected to the transmission input shaft (2) in a coupleable manner so as to transmit a torque, wherein a switchable clutch (8) is arranged between the second sub-powertrain (6) having the second electric machine (7) and the first sub-powertrain (3) having the first electric machine (4) and the internal combustion engine (5), wherein the first electric machine (4) and the second electric machine (7) rotate at the same speed when the clutch (8) is closed, wherein only one clutch (8) is arranged in the powertrain (1), the clutch (8) is arranged between the two electric machines (4, 7), the first electric machine (4) is permanently connected to the internal combustion engine (5) in a torque-transmitting manner, **characterised in that** a driven shaft (13) of the first electric machine (4) is arranged radially inside the driven shaft (20) of the second electric machine (7), and a part of the clutch (8) is connected to the driven shaft (13) of the first electric machine (4), and another part of the clutch (8) is connected to the driven shaft (20) of the second electric machine (7).

2. The powertrain (1) according to claim 1, **characterised in that** the first electric machine (4) and the second electric machine (7) are arranged coaxially to one another.

3. The powertrain (1) according to any one of claims 1 or 2, **characterised in that** only one transmission stage (9) is formed between the internal combustion engine (5) and the first electric machine (4) and the second electric machine (7).

4. The powertrain (1) according to claim 3, **characterised in that** the first electric machine (4) and the second electric machine (7) are arranged in an axial direction on one side of the transmission stage (9) and the internal combustion engine (5) is arranged in the axial direction on the other side of the transmission stage (9).

5. The powertrain (1) according to any one of claims 1 to 4, **characterised in that** the first electric machine (4) is mounted on one side in a transmission housing (47) and on another side is mounted on the driven shaft (20) of the second electric machine (7), or **in that** the second electric machine (7) is mounted on one side in a transmission housing (47) an on another side is mounted on the driven shaft (13) of the first electric machine (4).

6. The powertrain (1) according to any one of claims 1 to 5, **characterised in that** the powertrain (1) is formed such that it allows operation in a first operating mode for purely electric driving, in which the clutch (8) is open, and only the second electric machine (7) acts as a drive engine for the transmission input shaft (2), and/or in a second operating mode for series hybrid driving, in which the clutch (8) is open, the second electric machine (7) acts as a drive engine for the transmission input shaft (2), and the internal combustion engine (5) acts as a drive engine for the first electric machine (4) to generate electrical energy, and/or in a third operating mode for parallel hybrid driving, in which the internal combustion engine and additionally the first electric machine (4) and/or the second electric machine (7) acts as a drive engine for the transmission input shaft (2).

## Revendications

1. Chaîne cinématique (1) pour un véhicule automobile hybride, ayant un arbre d'entrée de transmission (2) qui, par l'intermédiaire d'une première chaîne cinématique partielle (3), est en relation fonctionnelle avec une première machine électrique (4) et un moteur à combustion interne (5), à des fins de transmission de couple et qui, par l'intermédiaire d'une seconde chaîne cinématique partielle (6), est en relation fonctionnelle avec une seconde machine électrique (7) à des fins de transmission de couple, la seconde machine électrique (7) étant reliée en permanence à l'arbre d'entrée de transmission (2) à des fins de transmission de couple et la première machine électrique (4) et le moteur à combustion interne (5) pouvant être reliés pour pouvoir être couplés à l'arbre d'entrée de transmission (2) à des fins de transmission de couple, un embrayage commutable (8) étant agencé entre la seconde chaîne cinématique partielle (6) avec la seconde machine électrique (7) et entre la première chaîne cinématique partielle (3) avec la première machine électrique (4) et le moteur à combustion interne (5), la première machine électrique (4) et la seconde machine électrique (7) tournant au même régime lorsque l'embrayage (8) est fermé, seul un embrayage (8) étant agencé dans la chaîne cinématique (1), l'embrayage (8) étant agencé entre les deux machines électriques (4, 7), la première machine électrique (4) étant reliée en permanence au moteur à combustion interne (5) à des fins de transmission de couple, **caractérisée en ce qu'**un arbre de sortie (13) de la première machine électrique (4) est agencé radialement à l'intérieur d'un arbre de sortie (20) de la seconde machine électrique (7), et **en ce qu'**une partie de l'embrayage (8) est reliée à l'arbre de sortie (13) de la première machine électrique (4) et **en ce qu'**une autre partie de l'embrayage (8) est reliée à l'arbre de sortie (20) de la seconde machine électrique (7).

2. Chaîne cinématique (1) selon la revendication 1, **caractérisée en ce que** la première machine électrique (4) et la seconde machine électrique (7) sont agencées coaxialement l'une par rapport à l'autre.

3. Chaîne cinématique (1) selon l'une quelconque des revendications 1 ou 2, **caractérisée en ce qu'**un seul étage de transmission (9) est formé entre le moteur à combustion interne (5) et la première machine électrique (4) ainsi que la seconde machine électrique (7).

4. Chaîne cinématique (1) selon la revendication 3, **caractérisée en ce que** la première machine électrique (4) et la seconde machine électrique (7) sont agencées dans la direction axiale d'un côté de l'étage de transmission (9) et **en ce que** le moteur à combustion interne (5) est agencé dans la direction axiale de l'autre côté de l'étage de transmission (9).

5. Chaîne cinématique (1) selon l'une quelconque des revendications 1 à 4, **caractérisée en ce que** la première machine électrique (4) est montée d'un côté dans un carter de transmission (47) et d'un autre côté sur l'arbre de sortie (20) de la seconde machine électrique (7), ou **en ce que** la seconde machine électrique (7) est montée d'un côté dans un carter de transmission (47) et d'un autre côté sur l'arbre de sortie (13) de la première machine électrique (4).

6. Chaîne cinématique (1) selon l'une quelconque des revendications 1 à 5, **caractérisée en ce que** la chaîne cinématique (1) est formée de façon à permettre un fonctionnement dans un premier mode de fonctionnement pour une propulsion purement électrique, dans lequel l'embrayage (8) est ouvert et seule la seconde machine électrique (7) agit comme une machine d'entraînement pour l'arbre d'entrée de transmission (2), et/ou dans un deuxième mode de fonctionnement pour une propulsion hybride en série, dans lequel l'embrayage (8) est ouvert, la seconde machine électrique (7) agit comme une machine d'entraînement pour l'arbre d'entrée de transmission (2) et le moteur à combustion interne (5) agit comme une machine d'entraînement pour la première machine électrique (4) pour produire de l'énergie électrique, et/ou dans un troisième mode de fonctionnement pour l'entraînement hybride parallèle, dans lequel le moteur à combustion interne et en outre la première machine électrique (4) et/ou la seconde machine électrique (7) agissent comme une machine d'entraînement pour l'arbre d'entrée de transmission (2).
